# EUROPEAN PATENT SPECIFICATION

(11) **EP 4 237 963 B1**
(45) Date of publication and mention of the grant of the patent: **29.04.2026**
(21) Application number: 21786704.3
(22) Date of filing: 09.09.2021
(51) Int. Cl.: G06F 16/23, G06F 16/27

(54) **KEYSPACE REFERENCES**
SCHLÜSSELRAUMVERWEISE
RÉFÉRENCES D'ESPACES DE CLÉS

(30) Priority: 28.10.2020 US 202017083000
(43) Date of publication of application: 06.09.2023
(73) Proprietor: Salesforce, Inc., San Francisco, CA 94105 (US)
(72) Inventor: HELLAND, Patrick James, San Francisco, California 94105 (US)
(74) Representative: Bryn-Jacobsen, Caelia
(86) International application number: PCT/US2021/049626
(87) International publication number: WO 2022/093408

(56) References cited:
- AU-A1- 2013 260 715
- US-A- 5 829 001
- US-A1- 2019 392 072

## Description

### BACKGROUND

### Technical Field

This disclosure relates generally to database systems and, more specifically, to tracking record writes for keyspaces across a set of database nodes.

### Description of the Related Art

Modern database systems routinely implement management systems that enable users to store a collection of information in an organized manner that can be efficiently accessed and manipulated. In some cases, these management systems maintain a log-structured merge tree (LSM tree) having multiple levels that each store information in database records as key-value pairs. An LSM tree typically includes two high-level components: an in-memory cache and a persistent storage. During operation, a database system receives transaction requests to process transactions that include writing database records to the persistent storage. The database system initially writes the database records into the in-memory cache before later flushing them to the persistent storage.

US2019/392072A1 in an abstract states that "A replicated key-value store is implemented using a "last-write-wins" consensus protocol. To improve throughput and latency in cross-data-center configurations, a system deploys a cross-cluster, learner-only member to a cluster of nodes (e.g., a data center). The cross-cluster, learner-only member submits key-values received at local leader members to remote clusters. Conflicts between the key-values and initial values at the remote clusters are resolved using a "last-write-wins" consensus protocol."

US5829001A in an abstract states that "The present invention provides an improved method and apparatus for performing database updates in a distributed system having an originating database stored in a server and a partial or complete copy of the database stored in a client. In one embodiment, a database update system includes a server having a database, a network, and a client having a storage and software for accessing the database over the network. The client maintains the last update time of each table stored in its storage. The server maintains the modification time as an integral field of each record in the database. The modification time of a record indicates the last time at which the record was modified in the database. The client software requests copies of all records of a table stored in the client's storage that have a modification time that is later than the last update time of the table. In another embodiment, the server also maintains a modification table that includes a record for each table in the database. Each record in the modification table includes a table modification time that indicates the last time at which any record in the associated table was modified in the database."

AU2013260715A1 in an abstract states that "A data consistency management system may include a memory storing machine readable instructions to receive a query, and determine a suitability of the query for processing by a NoSQL data store, or a RDBMS. The memory may further include machine readable instructions to rank data tables based on a combination of read queries and query patterns suitable for the NoSQL data store. Based on the ranking, the memory may further include machine readable instructions to determine data tables that are to be managed by the NoSQL data store, or by the RDBMS, determine whether the query is for a data table managed by the NoSQL data store, and based on a determination that the query is for a data table managed by the NoSQL data store, translate the query to NoSQL API calls for using the NoSQL data store to respond to the query. "

### SUMMARY

The present invention is set out in the independent claims, with some optional features set out in the claims dependent thereto.

### BRIEF DESCRIPTION OF THE DRAWINGS

Fig. 1 is a block diagram illustrating example elements of a system capable of tracking record writes for keyspaces across a set of database nodes using keyspace references, according to some embodiments.
Fig. 2A is a block diagram illustrating example elements of a keyspace permission, according to some embodiments.
Fig. 2B is a block diagram illustrating example elements of a keyspace reference, according to some embodiments.
Fig. 3 is a block diagram illustrating example elements that pertain to a database node processing an active database transaction using keyspace references, according to some embodiments.
Fig. 4 is a block diagram illustrating example elements that pertain to a database node updating a keyspace reference after committing a database transaction, according to some embodiments.
Fig. 5 and 6 are flow diagrams illustrating example methods that pertain to processing a database transaction using keyspace references, according to some embodiments.
Fig. 7 is a block diagram illustrating elements of a multi-tenant system, according to some embodiments.
Fig. 8 is a block diagram illustrating elements of a computer system for implementing various systems described in the present disclosure, according to some embodiments.

### DETAILED DESCRIPTION

As explained above, a modern database system may maintain an LSM tree that includes database records having key-value pairs. In many cases, the database system includes a single active database node that is responsible for writing database records to the persistent storage component of the LSM tree. But in some cases, the database system includes multiple database nodes that are writing database records for the LSM tree. To prevent multiple database nodes from writing database records at close to the same time for the same database keys, the database nodes may be provisioned with key permissions that identify the keys for which those database nodes are permitted to write corresponding database records.

In various cases, however, it may be desirable to re-provision key permissions to a new owner database node from the previous owner database node. As an example, an administrator may wish to perform a rolling upgrade of a database node to a new software version. In order to prevent delays for database transactions whose keys are associated with the key permissions provisioned to that database node, it may be desirable to re-provision those key permissions to another database node so that it can carry out those database transactions while the former database node has been taken offline to be upgraded. But in many cases, at the point when re-provisioning is to occur, that former database node still has in-progress database transactions that are tied to the key permissions being re-provisioned. Restarting those in-progress database transactions is not desirable as some of those transactions may take a lengthy amount of time to carry out (e.g., an hour). The present disclosure addresses, among other things, this technical problem of how to handle in-progress transactions when re-provisioning key permissions to a new owner database node.

More specifically, this disclosure describes various techniques for enabling in-progress transactions for a keyspace to commit or rollback at a previous owner database node while enabling new transactions for the same keyspace to be started at the new owner database node. But since there can be transactions running on two or more separate database nodes that commit database records for the same keyspace, a mechanism is desired for ensuring that their writes do not cause data corruption within the database. This disclosure thus further addresses the technical problem of ensuring consistency within a database system when there are multiple transactions being performed across multiple database nodes for the same keyspace.

In various embodiments described below, keyspace references are used for tracking the location where database record writes for a particular keyspace are to occur and the location(s) where database records writes have previously occurred for the keyspace. When permission to write for a keyspace is initially provisioned to a first database node of a database system, a first keyspace reference may be created that indicates that database record writes for that keyspace are to occur at only the first database node. As a result, database nodes of the database system direct write requests to the first database node based on the first keyspace reference, which may be included in a reference catalog that stores keyspace references for various keyspaces of the database system.

At some point during the operation of the database system, the particular keyspace may be re-provisioned from the first database node to a second database node. When that keyspace is provisioned to the second database node, in some embodiments, a second keyspace reference is created that has an "open" state that indicates that database record writes for the keyspace are to occur at the second database node. The first keyspace reference associated with the first database node may be set to a "closed" state that indicates that database record writes for the keyspace are no longer to occur at the first database node. Consequently, database nodes of the database system direct write requests to the second database node instead of the first database node. As a result, database record writes for the keyspace may continue to occur, even in cases in which the first database node is taken offline. While new database record writes are directed to the second database node, the first database node may still have active transactions that have written, but not committed, a record for the keyspace. As a result, a situation can arise in which the second database node writes and commits a record before the first database node's record for the same key, resulting in an inconsistent database as the latter record appears to be written before the former record even though the former record was written before the latter record.

In order to avoid the situation, in various embodiments, when the second database node wishes to write a database record for a key in the particular keyspace, the second database node reviews keyspace references in the reference catalog. Based on the keyspace references, the second database node may determine whether its record write for the keyspace will potentially collide with a record write of another database node within a certain time frame. For example, the second database node may determine that there are in-progress database transactions at the first database node that have written database records for the keyspace. If the second database node determines that at least one database record is to be written within the keyspace, in various embodiments, the second database node sends a request to each of the database nodes that may have written a database record specific to the key for which the second database node intends to write a database record. The second database node sends a request to the first database node to determine if one of the database records that it wrote for the keyspace is associated with the key. If no record has been written for that key, then the second database node writes the record that it wants for the key. If there is a record written for the key by another database node, then the second database node may abort its transaction or ensure that its record is committed after the other database node's record. By being able to learn about database record writes by other database nodes for a given key, a database node may prevent itself from writing and committing a database record for the same key in a way that would result in a corrupted database.

In some cases, a keyspace may be moved around several database nodes and as a result, there can be several "read" keyspace references (that identify locations where database records writes have previously occurred for a keyspace) and a single "write" keyspace reference ( that identifies the location where database record writes for a keyspace are to occur). Accordingly, when a database node wishes to read or write a database record for a key, it may have to check multiple keyspace references and their associated database nodes for records corresponding to the key.

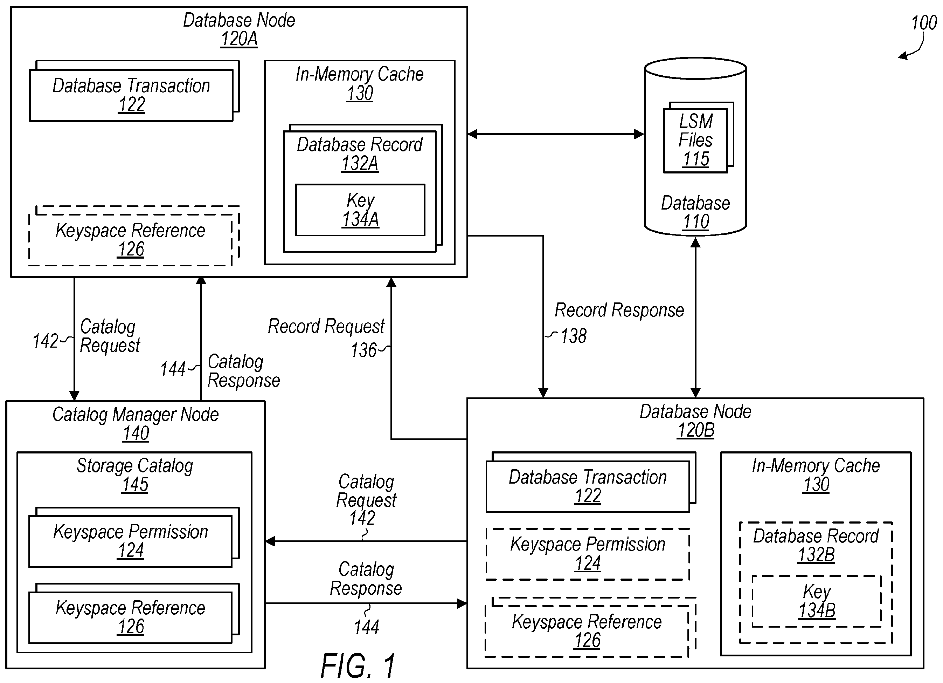

The techniques of the present disclosure may be advantageous over prior approaches as these techniques provide a mechanism for allowing keyspaces to be re-provisioned between database nodes while ensuring consistency in a database system by preventing those database nodes from committing records in an incorrect temporal order. In particular, these techniques allow for keyspaces to be re-provisioned without having to restart in-progress transactions. By not restarting in-progress transactions, database resources are not wasted and time is saved as database transactions can take a long time to perform. Furthermore, by not having to incur the cost of restarting in-progress transactions as part of a keyspace transfer, performing updates at a database node is less expensive. Therefore, the overall operation of the database system is improved. An exemplary application of the techniques of this disclosure will now be discussed, starting with reference to Fig. 1.

Turning now to Fig. 1, a block diagram of a system 100 is shown. System 100 includes a set of components that may be implemented via hardware or a combination of hardware and software routines. In the illustrated embodiment, system 100 includes a database 110 (having LSM files 115), database nodes 120A and 120B, and a catalog manager node 140. As further shown, catalog manager node 140 includes a storage catalog 145 having keyspace permissions 124 and keyspace references 126 of which one or more are stored at database nodes 120. Also as illustrated, database nodes 120 include respective in-memory caches 130 that store database records 132 for keys 134. In some embodiments, system 100 is implemented differently than shown. As an example, there may not be a catalog manager node 140; instead, storage catalog 145 may be stored in storage area shared by database nodes 120 such that database nodes 120 maintain keyspace permissions 124 and key references 126. Moreover, while the techniques of this disclosure are discussed with respect to LSM trees, these techniques can be applied to other types of database implementations in which multiple nodes are writing and committing records for the database.

System 100, in various embodiments, implements a platform service (e.g., a customer relationship management (CRM) platform service) that allows users of that service to develop, run, and manage applications. System 100 may be a multi-tenant system that provides various functionality to multiple users/tenants hosted by the multi-tenant system. Accordingly, system 100 may execute software routines from various, different users (e.g., providers and tenants of system 100) as well as provide code, web pages, and other data to users, databases, and other entities associated with system 100. As illustrated, for example, system 100 includes database nodes 120 that can store, manipulate, and retrieve data from LSM files 115 of database 110 on behalf of users of system 100.

Database 110, in various embodiments, is a collection of information that is organized in a manner that allows for access, storage, and manipulation of that information. Accordingly, database 110 may include supporting software that allows for database nodes 120 to carry out operations (e.g., accessing, storing, etc.) on information that is stored at database 110. In some embodiments, database 110 is implemented by a single or multiple storage devices connected together on a network (e.g., a storage attached network (SAN)) and configured to redundantly store information to prevent data loss. The storage devices may store data persistently and thus database 110 may serve as a persistent storage. In various embodiments, database records 132 that are written into LSM files 115 by one database node 120 are accessible by other database nodes 120. LSM files 115 may be stored as part of a log-structured merge tree (an LSM tree) implemented at database 110.

An LSM tree, in various embodiments, is a data structure storing LSM files 115 in an organized manner that uses a level-based scheme. The LSM tree may comprise two high-level components: an in-memory component implemented at in-memory caches 130 and an on-disk component implemented at database 110. In some embodiments, in-memory caches 130 are considered to be separate from the LSM tree. Database nodes 120 may initially write database records 132 into their in-memory caches 130. As caches 130 become full and/or at particular points in time, database nodes 120 may flush their database records 132 to database 110. As a part of flushing those database records 132, in various embodiments, database nodes 120 write the database records 132 into a set of new LSM files 115 at database 110.

LSM files 115, in various embodiments, are sets of database records 132. A database record 132 may be a key-value pair comprising data and a corresponding database key 134 that is usable to look up that database record. For example, a database record 132 may correspond to a data row in a database table where the database record 132 specifies values for one or more attributes associated with the database table. In various embodiments, a file 115 is associated with one or more database key ranges defined by the keys 134 of the database records 132 that are included in that LSM file 115. Consider an example in which a file 115 stores three database records 132 associated with keys 134 "XYA," "XYW," and "XYZ," respectively. Those three keys 134 span a database key range of XYA→XYZ and thus that LSM file 115 is associated with that database key range.

Database nodes 120, in various embodiments, are hardware, software, or a combination thereof capable of providing database services, such as data storage, data retrieval, and/or data manipulation. These database services may be provided to other components in system 100 or to components external to system 100. For example, database node 120A may receive a request from an application server to perform a database transaction 122. A database transaction 122, in various embodiments, is a logical unit of work (e.g., a specified set of database operations) to be performed in relation to database 110. As an example, processing a database transaction 122 may include executing a SQL SELECT command to select one or more rows from one or more database tables. The contents of a row may be specified in a database record 132 and thus a database node 120 may return one or more database records 132 that correspond to the selected one or more table rows. In various cases, performing database transaction 122 may include a database node 120 writing one or more database records 132 to the LSM tree. The database node 120, in various embodiments, initially writes those database records 132 into its in-memory cache 130 before flushing them to database 110.

In-memory caches 130, in various embodiments, are buffers that store data in memory (e.g., random access memory) of database nodes 120. HBase^{™} Memstore is an example of an in-memory cache 130. As mentioned, a database node 120 may initially write a database record 132 in its in-memory cache 130. In some cases, the latest/newest version of a row in a database table may be found in a database record 132 that is stored in an in-memory cache 130. Database records 132, however, that are written into a database node 120's in-memory cache 130 are not visible to the other database nodes 120, in some embodiments. That is, the other database nodes 120 do not know, without asking, what information is stored within the in-memory cache 130 of the database node 120. In order to prevent database record conflicts as one database node 120 may not know about the database records 132 written by another database node 120, in various embodiments, database nodes 120 are provisioned with keyspace permissions 124 that control which database records 132 can be written by a given database node 120. Accordingly, keyspace permissions 124 can prevent two or more database nodes 120 from writing database records 132 for the same database key 134 within a particular time interval so as to prevent the database nodes 120 from flushing conflicting database records 132 to database 110.

A keyspace permission 124, in various embodiments, is information that identifies a keyspace and a corresponding owner of that keyspace. As shown for example, database node 120B is provisioned with a keyspace permission 124 and thus database node 120B is permitted to write, to its in-memory cache 130, database records 132 whose corresponding keys 134 fall within the keyspace associated with that keyspace permission 124. In various embodiments, a keyspace permission 124 is provisioned to at most one database node 120 at any given time. Accordingly, while a keyspace permission 124 is provisioned to database node 120B, database node 120A is not permitted to write database records 132 whose corresponding keys 134 fall within the keyspace associated with that keyspace permission 124. In order to be permitted to write database records 132 for a certain key 134, in various embodiments, database nodes 120 may issue a permission request to catalog manager node 140 that specifies the key 134. In some cases, a permission request may specify multiple keys 134 (a keyspace).

Catalog manager node 140, in various embodiments, facilitates the management and distribution of keyspace permissions 124 and keyspace references 126 among database nodes 120. As part of facilitating the management and distribution of keyspace permissions 124, in various embodiments, catalog manager node 140 updates and distributes keyspace permissions 124 in response to receiving requests from database nodes 120. For example, catalog manager node 140 may receive a request from database node 120B for permission to write records 132 for the keyspace "XY". In response, catalog manager node 140 may determine if the keyspace permission 124 for the keyspace has already been provisioned to a database node 120. If it has not been provisioned, then catalog manager node 140 may update the keyspace permission 124 to provision the keyspace to database node 120B and then may notify all database nodes 120, including database node 120B, about the provisioning of that keyspace. If permission for the requested keyspace has been provisioned, then, in various embodiments, catalog manager node 140 identifies the owning database node 120 and sends a request to that database node 120 to relinquish the requested keyspace. That database node 120 may send a response that indicates that the keyspace has been relinquished and then catalog manager node 140 may update the keyspace permission 124 to provision the keyspace to database node 120B and then may notify all database nodes 120 about the re-provisioning of that keyspace. In various embodiments, when a keyspace is provisioned to a database node 120, a keyspace reference 126 is created.

A keyspace reference 126, in various embodiments, includes information that identifies a time frame during which a specified database node 120 wrote database records 132 having keys 134 that fall within a specified keyspace. For example, a keyspace reference 126 may indicate that database node 120A wrote database records 132 belonging to the keyspace "XY" during a time frame that is defined from a first transaction commit number (XCN) to a second, later occurring XCN. In various embodiments, one of the keyspace references 126 for a keyspace may identify a database node 120 that is currently permitted to write database records 132 belonging to that keyspace. A keyspace reference 126 that identifies the database node 120 that is permitted to write for a keyspace is referred to herein as a "write" keyspace reference 126. This stands in contrast to a "read" keyspace reference 126 that identifies a database node 120 that previously wrote for a keyspace but is no longer permitted to write for the keyspace (unless the associated keyspace permission 124 is re-provisioned back to that database node 120). Consequently, in various embodiments, catalog manager node 140 may store multiple keyspace references 126 for the same keyspace, one of which is a write keyspace reference 126 and the others being read keyspace references 126. When a keyspace is re-provisioned to another database node 120, the current write keyspace reference 126 may be converted to a read keyspace reference 126 and the newly created keyspace reference 126 may become the write keyspace reference 126.

When a database node 120 wishes to have a database record 132 be written for a certain key 134, in various embodiments, the database node 120 sends a catalog request 142 to catalog manager node 140 for one or more keyspace references 126. In various cases, catalog manager node 140 may return the write keyspace reference 126 as part of a catalog response 144 to the requesting database node 120. The requesting database node 120 may then send a record write request to the database node 120 that is identified by the write keyspace reference 126 as being permitted to write for the keyspace that includes the appropriate key 134. Consider an example in which database node 120A wishes to write a database record 132 for a key 134 "X", but the keyspace permission 124 that encompasses key 134 "X" has been provisioned to database node 120B. In order to have that database record 132 be written, database node 120A may obtain a write keyspace reference 126 from storage catalog 145 that indicates that database node 120B is permitted to write database records 132 for a keyspace that encompasses key 134 "X". As a result, database node 120A may send a record write request to database node 120B to have the particular database record 132 be written.

When a database node 120 wishes to write a database record 132 to its own in-memory cache 130 for a key 134, in various embodiments, the database node 120 may send a catalog request 142 to catalog manager node 140 for one or more keyspace references 126. Catalog manager node 140 may then return one or more read keyspace reference 126 as part of a catalog response 144 to the requesting database node 120. In various embodiments, that database node 120 consults those read keyspace references 126 to determine if another database node 120 has written for the associated keyspace within a particular time frame that will potentially result in commit conflicts between those database nodes 120. As an example, database node 120B may wish to write a database record 132B having a key 134B. Database node 120B may determine, from a set of read keyspace references 126, that database node 120A has written a record 132 for a keyspace that includes key 134B, but the record 132 has not been committed. As shown, database node 120A has written a database record 132A having a key 134A, which belongs to the keyspace for this example.

In various embodiments, in response to determining that another database node 120 has written for a keyspace within a certain time frame, a database node 120 sends a record request 136 to that database node 120 to determine if the database node 120 has specifically written a record 132 for a particular key 134. Continuing with the previous example, database node 120B sends a record request 136 to database node 120A to determine if it wrote a database record 132 for key 134B. Database node 120A sends a record response 138 that indicates whether a database record 132 for key 134B has been written. If a database record 132 has been written for key 134B, then database node 120B may abort the database transaction 122 associated with its record write or may delay the record write until that other database record 132 has been committed by database node 120A. If a database record 132 has not been written for key 134B, then database node 120B may write and commit a database record 132 for key 134B.

By maintaining keyspace permissions 124 and keyspace references 126 for system 100, database nodes 120 may be able to determine where database records 132 are to be written and where previously written but committed database records 132 can be found. As such, when a user causes one or more keyspaces to be re-provisioned to other database nodes 120 as part of updating a particular database node 120, all database nodes 120 of system 100 may determine, from keyspace permissions 124 and keyspace references 126, which database nodes 120 are permitted to write database records 132 for the re-provisioned keyspaces. As a result, database records writes to those keyspaces can continue to occur while that particular database node 120 is being updated. Furthermore, in-progress database transactions 122 on the particular database node 120 that is being updated may commit without causing conflicts as those other database nodes 120 that were provisioned with those keyspaces can learn about what database record writes occurred at the particular database node 120. Thus, those database nodes 120 can prevent themselves from writing and committing database records 132 that will conflict with database records written at the particular database node 120.

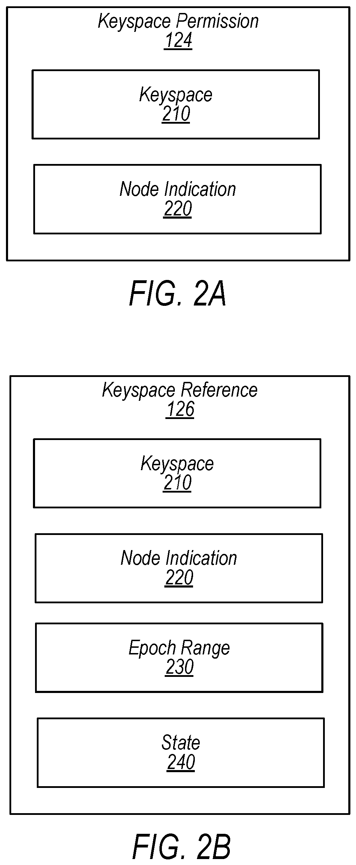

Turning now to Fig. 2A, a block diagram of example elements of a keyspace permission 124 is shown. In the illustrated embodiment, the keyspace permission 124 specifies a keyspace 210 and a node indication 220. In some embodiments, system 100 does not include keyspace permissions 124, but uses keyspace references 126 to fulfill their roles. In some embodiments, a keyspace permission 124 is implemented differently than shown. As an example, a keyspace permission 124 may specify an identifier that distinguishes it from other keyspace permissions 124 and allows for the keyspace permission 124 to be looked up in storage catalog 145.

Keyspace 210, in various embodiments, corresponds to a range of keys 134 as seen in Fig. 1 and defined by a minimum key 134 and a maximum key 134. For example, keyspace 210 may correspond to the range of keys 134 from "AAAAA" to "EEEEE". In some embodiments, keyspace 210 corresponds to multiple key ranges (e.g., from "AAAAA" to "BBBBB" and from "CCCCC" to "EEEEE"). In some cases, the key range of keyspace 210 may be specified by a single key prefix instead of a minimum key 134 and a maximum key 134. For example, keyspace 210 may specify "XY", encompassing all keys 134 having the prefix "XY". In some embodiments, there is a single keyspace permission 124 for a given keyspace 210 so that at most one database node 120 is permitted to write database records 132 for that keyspace 210. Accordingly, when a non-owning database node 120 wishes to write for a database record 132 for a particular keyspace 210, the non-owning database node 120 may either request ownership of the keyspace 210 or issue a request to the owning database node 120 to write the database record 132. If ownership of keyspace 210 is to be transferred, in various embodiments, the node indication 220 of the corresponding keyspace permission 124 is updated to reflect the new owning database node 120.

Node indication 220, in various embodiments, indicates the database node 120 that is associated with a keyspace permission 124. In some embodiments, a database node 120 is assigned a log window that defines a list of log files to which the database node 120 is permitted to write log information. Node indication 220 may specify an identifier for the log window and thus be associated with the database node 120 via the log window. Node indication 220 may be updated in response to the occurrence of various events. For example, catalog manager node 140 might update the node indication 220 for a particular keyspace permission 124 after receiving a request from a database node 120 for ownership of the keyspace 210 corresponding to that particular keyspace permission 124. As another example, keyspace 210 ownership may be transferred away from a database node 120 that is receiving a software update to its database application and thus node indications 220 may be updated to remove keyspace 210 ownership from that database node 120.

In various embodiments, a keyspace permission 124 can be split into multiple keyspace permissions 124. For example, a keyspace permission 124 specifying the keyspace 210 "XY" may be split into two keyspace permissions 124: one of which specifies a keyspace 210 "XYA-XYM" and the other of which specifies a keyspace 210 "XYN-XYZ." In various embodiments, multiple keyspace permissions 124 can be merged into a single keyspace permission 124. For example, the two keyspace permissions 124 from the previous example may be merged into a single keyspace permission 124 that specifies the keyspace 210 "XY."

Turning now to Fig. 2B, a block diagram of example elements of a keyspace reference 126 is shown. In the illustrated embodiment, the keyspace reference 126 specifies a keyspace 210, a node indication 220, an epoch range 230, and a state 240. In some embodiments, a keyspace reference 126 is implemented differently than shown-e.g., a keyspace reference 126 may not specify a state 240.

As mentioned, a keyspace reference 126 may be created when permission to write for a keyspace 210 is conferred to a database node 120. When a keyspace reference 126 is created, in various embodiments, the keyspace 210 of the keyspace reference 126 is set to identify the conferred keyspace and the node indication 220 is set to identify the associated database node 120. Various information included in a keyspace reference 126 may be added and updated over time, including after the permission to write for the identified keyspace has been conferred to another database node 120. For example, the epoch range 230 (described below) of a keyspace reference 126 may not specify a complete range (e.g., an upper bound) until after all active database transactions 122 that wrote for the keyspace 210 have committed.

Epoch range 230, in various embodiments, identifies a time frame in which database records 132 were committed for a corresponding keyspace 210. When a database transaction 122 is being committed, the database records 132 written for that database transaction 122 may be stamped with a transaction commit number (XCN). A database record 132 that is committed earlier in time may be stamped with an XCN that has a smaller numerical value than the XCN of a database record 132 committed at a later time. Committed database records 132, in various embodiments, remain in the in-memory cache 130 of a database node 120 until they are flushed to database 110 in response to a triggering event (e.g., in-memory cache 130 storing a threshold amount of data). When a database node 120 flushes its in-memory cache 130, it may flush one or more database records 132 up to a particular XCN (referred to as a "flush XCN). In various embodiments, epoch range 230 defines a time frame by specifying a minimum XCN and a maximum XCN. The minimum XCN may identify the most recent flush XCN at the time when the keyspace reference 126 is created. For example, database node 120B may flush all database records 132 that have an XCN less than 600. If thereafter a keyspace reference 126 is created in association with database node 120B, then the lower bound of the epoch range 230 of that keyspace reference 126 may be set to 600.

The maximum XCN may identify the XCN associated with the last database transaction 122 that wrote for the keyspace 210 before it was conferred to another database node 120. That is, while a database node 120 owns a particular keyspace 210, it may perform multiple database transactions 122 that write database records 132 for that keyspace 210. The particular keyspace 210 may be conferred, at some point, to another database node 120; however, those database transactions 122 may still be active. In various embodiments, those database transactions 122 are allowed to complete and are not prematurely aborted. The epoch range 230 of the keyspace reference 126 corresponding to those database transactions 122 may be updated to specify the XCN of the last of those transactions 122 to commit as the maximum XCN of the epoch range 230. Since the maximum XCN may not be set until the last of those transactions 122 commits, in various embodiments, an epoch range 230 initially specifies a null value for the maximum XCN. As a result, while the maximum XCN is set to a null value, the time frame indicated by the epoch range 230 may have a beginning but no end.

State 240, in various embodiments, identifies a stage of a keyspace reference 126 in its lifecycle. The states may include "open," "closed," and "inactive." In various embodiments, the "open" state indicates that record writes for the corresponding keyspace 210 are permitted at the database node 120 indicated by the corresponding node indication 220. When a keyspace reference 126 is initially created, its state 240 may be set to "open." In various embodiments, the "closed" state indicates that 1) record writes for the keyspace 210 are not permitted at the corresponding database node 120 and 2) there are still active database transactions 122 at that database node 120. An active database transaction 122, in various embodiments, refers to an in-progress database transaction 122 for which a database node 120 is writing database records 132 to its in-memory cache 130. An active database transaction 122 may become a committed database transaction 122 when the database records 132 for that database transaction 122 have committed. When the keyspace 210 of a keyspace reference 126 has be provisioned to another database node 120, the keyspace reference 126's state 240 may be set to "closed." In various embodiments, the "inactive" state indicates that the active database transactions 122 associated with the keyspace 210 have committed on the corresponding database node 120. In various embodiments, a keyspace reference 126 may be deleted after the committed database records 132 associated with the keyspace reference 126 have been flushed from the in-memory cache 130 of the corresponding database node 120 to persistence storage (e.g., database 110).

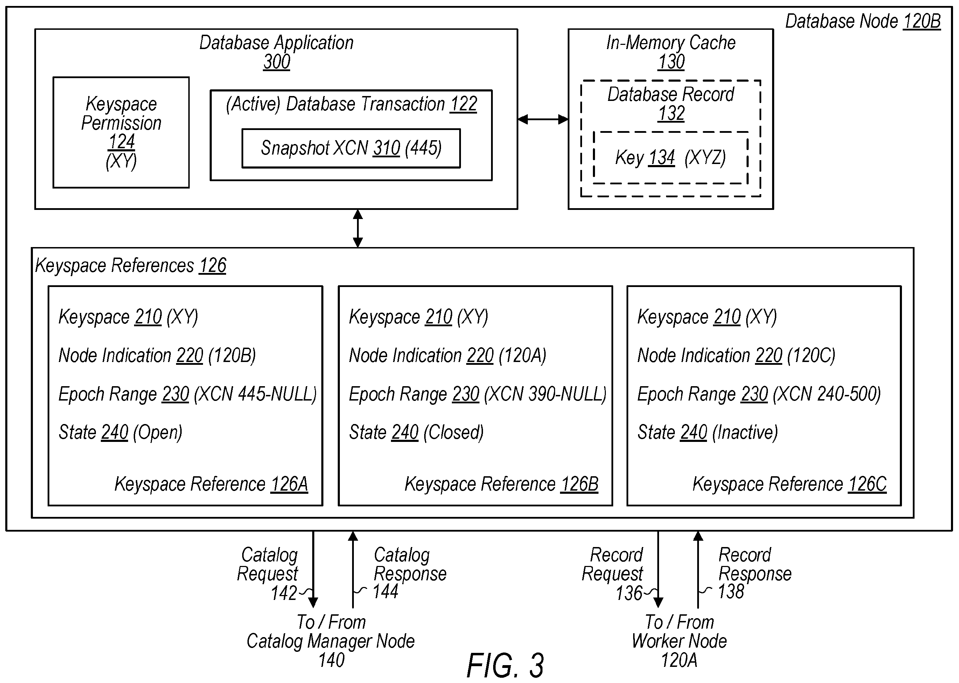

Turning now to Fig. 3, a block diagram of an example layout that pertains to a database node 120 using keyspace references 126 to process an active database transaction 122. In the illustrated embodiment, database node 120B includes keyspace references 126, an in-memory cache 130, and a database application 300. As shown, database application 300 is assigned a keyspace permission 124 "XY" and is processing an active database transaction 122 having an associated snapshot transaction commit number (snapshot XCN) 310 "445." As further shown, there are three keyspace references 126, each associated with a different database node 120 but corresponding to the same keyspace 210 "XY." In some embodiments, a database node 120 is implemented differently than shown. As an example, database application 300 may process multiple active transactions 122 and multiple committed transactions 122.

Database application 300, in various embodiments, is a set of program instructions that are executable to manage database 110, including managing an LSM tree built around database 110. As such, database application 300 may receive requests to perform database transactions 122 that involve reading and/or writing database records 132 for database 110. As an example, database node 120B may receive, from an application node, a transaction request to execute a set of SQL statements identified by the application node. Upon receiving a transaction request, database application 300 may initiate an active database transaction 122 based on the received transaction request. In various embodiments, the active database transaction 122 is associated with a snapshot XCN 310. A snapshot XCN 310, in various embodiments, identifies the latest XCN whose corresponding database records 132 can be read by an active database transaction 122. For example, the illustrated active database transaction 122 is associated with a snapshot XCN 310 "445." As a result, that active database transaction 122 can read committed database records 132 that are assigned an XCN less than or equal to "445." In some cases, only database records 132 whose XCN is less than "445" may be read.

The following discussion will use an example to provide a more in-depth understanding of the concepts discussed throughout this disclosure. Consider an example in which database node 120B wishes to write, for the illustrated active database transaction 122, a database record 132 having a key 134 "XYZ." Before writing the database record 132, in various embodiments, database node 120B considers keyspace references 126 to determine whether another database node 120 has written for the keyspace 210 "XY" within a time frame that includes the snapshot XCN 310 "445." As disclosed, keyspace references 126 may be accessed from catalog manager node 140 via a catalog request 142 and subsequent catalog response 144. Database node 120B may issue the catalog request 142 when initiating the active database transaction 122. In some cases, catalog manager node 140 may provide only those keyspace references 126 that have an epoch range 230 that encompasses the snapshot XCN 310 of the initiated database transaction 122.

As illustrated, keyspace reference 126A identifies database node 120B and has an open state 240 indicating that record writes are to occur at database node 120B for the keyspace 210 "XY." Accordingly, keyspace reference 126A is considered a "write" keyspace reference 126 while keyspace references 126B and 126C are considered "read" keyspace references 126 as they identify locations where record writes were previously allowed to occur for the keyspace 210 "XY." In some cases, database node 120B may have previously written a database record 132 for the key 134 "XYZ" that has not committed. As such, in some embodiments, database node 120B initially searches its in-memory cache 130 for database records 132 having the key 134 "XYZ." If a database record 132 is located having the key 134 "XYZ," then database node 120B may write the new database record 132 with respect to that located database record 132. If there is no such database record 132 in its in-memory cache 130, then database node 120B may consider other keyspace references 126.

As further illustrated, keyspace reference 126B identifies database node 120A, has an open epoch range 230 (no upper bound XCN is defined), and has a closed state 240 indicating that there are still active database transactions 122 that may have written a database record 132 for the keyspace 210 "XY" that has not committed. Database node 120B may initially make a determination on whether the snapshot XCN 310 "445" falls within the epoch range 230 of keyspace reference 126B. Because the snapshot XCN 310 "445" falls within the epoch range 230 "390-NULL" and not all database transactions 122 associated with the keyspace 210 "XY" have committed, there exists a possibility that database node 120A has written a database record 132 having the key 134 "XYZ" that is not known to database node 120B. As a result, in various embodiments, database node 120B determines whether a database record 132 has been written at database node 120A for the key 134 "XYZ." To do so, database node 120B sends a record request 136 to database node 120A that requests an indication on whether database node 120A has written such a database record 132. Database node 120A returns a record response 138. If the record response 138 indicates that database node 120A has written a database record 132 for the key 134 "XYZ," then database node 120B may abort the active database transaction 122 (or a subtransaction portion) or wait until that other database record 132 has committed before writing its database record 132 for the key 134 "XYZ." A record response 138, in some embodiments, includes the database record 132 that was written by a database node 120. If the record response 138 indicates that database node 120A has not written a database record 132 for the key 134 "XYZ," then database node 120B may consider other keyspace references 126.

As illustrated, keyspace reference 126B identifies a database node 120C, has a closed epoch range 230, and has an inactive state 240 indicating that all active database transactions 122 at database node 120C have been committed. While those database transactions 122 have been committed, in some cases, the corresponding database records 132 have not been flushed to database 110, but remain in the in-memory cache 130 of database node 120C. Accordingly, database node 120B may send a record request 136 to database node 120C for an indication on whether database node 120C has written a database record 132 for the key 134 "XYZ". Based on a received record response 138 from database node 120, database node 120B may abort the active database transaction 122 or wait to write its database record 132 after the other database record 132 has been flushed. If the record response 138 indicates that database node 120C has not written a record 132 for the key 134 "XYZ," then database node 120C may consider other keyspace references 126 in cases in which there are more keyspace references 126 associated with the key 134 "XYZ" and whose epoch range 230 encompasses snapshot XCN 310 "445."

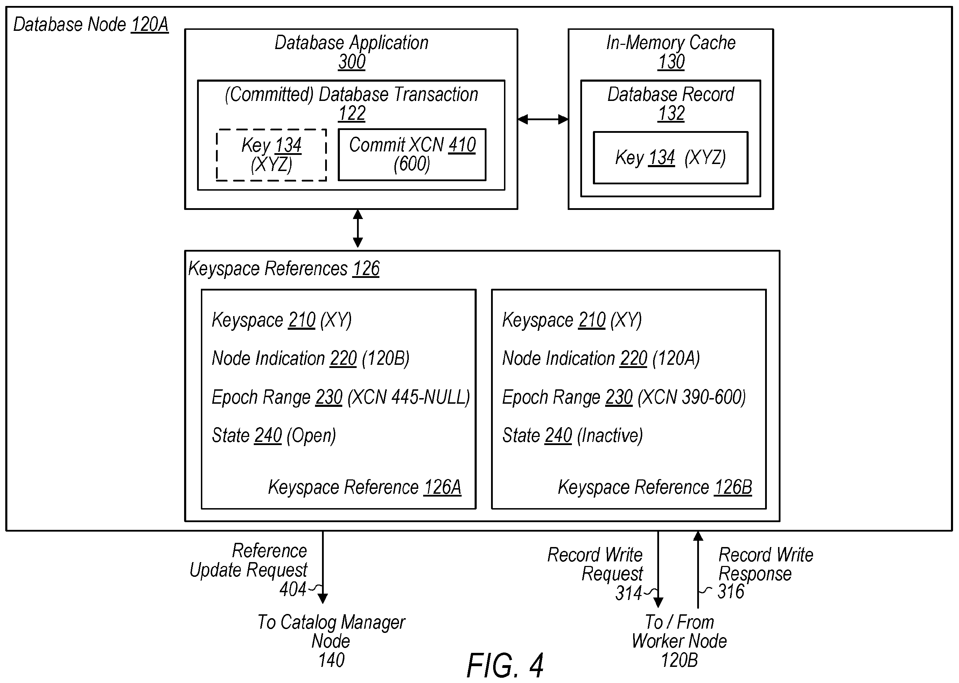

Turning now to Fig. 4, a block diagram of an example layout that pertains to a database node 120 causing a keyspace references 126 to be updated in response to the commitment of an active database transaction 122. In the illustrated embodiment, database node 120A includes keyspace references 126, an in-memory cache 130, and a database application 300. As shown, database application 300 has committed a database transaction 122 with an XCN 410 "600."

While the following discussion is made with reference to database node 120A, the discussion is applicable to other database nodes 120, such as database node 120B. During operation, database node 120A may obtain a keyspace permission 124 to write database records 132 for the keyspace 210 "XY." In various cases, while database node 120A holds that keyspace permission 124, database node 120A may initiate multiple active database transactions 122 that write database records 132 for the keyspace 210 "XY." While database node 120A is processing those database transaction 122, database node 120A might receive a request from catalog manager node 140 to relinquish a portion or all of the keyspace 210 "XY." For example, database node 120A may be requested to relinquish the keyspace 210 "XYZ." In various embodiments, database node 120A relinquishes the requested keyspace 210, but allows for active database transactions 122 associated with that keyspace 210 to commit. While there is at least one active database transaction 122 associated with that keyspace 210, database node 120A may not update the corresponding keyspace reference 126 (e.g., keyspace reference 126B for the keyspace 210 "XY") to define an upper bound for its epoch range 230.

After processing an active database transaction 122, database node 120A may commit that database transaction 122, which results in a committed database transaction 122. As a part of the commitment process, in some embodiments, database node 120A stamps each database record 132 of the database transaction 122 with an XCN 410. As illustrated, for example, the committed transaction 122 has an XCN 410 "600". Accordingly, each record 132 associated with the committed transaction 122 may include metadata identifying XCN 410 "600." After processing the last active transaction associated with the relinquished keyspace 120, in various embodiments, database node 120A updates the epoch range 230 of the corresponding keyspace reference 126B with the XCN 410 of that database transaction 122. Consider an example in which the illustrated committed database transaction 122 was the last active transaction 122 at database node 120A for the keyspace 210 "XY." Accordingly, database node 120A may update the epoch range 230 of keyspace reference 126B to specify "XCN 390-600" and the state 240 to "inactive." Database node 120A may send a reference update request 404 to catalog manager node 140 to distribute a new version of keyspace reference 126B to the other database nodes 120 of system 100.

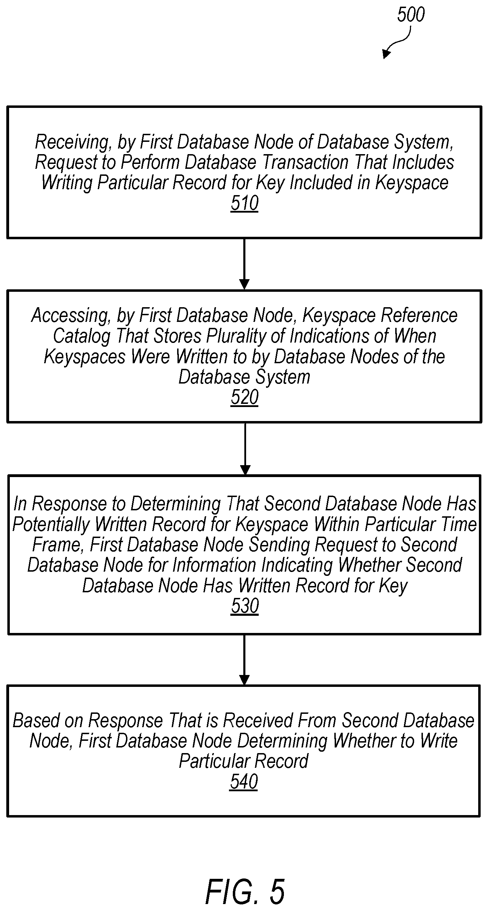

Turning now to Fig. 5, a flow diagram of a method 500 is shown. Method 500 is one embodiment of a method that is performed by a first database node (e.g., database node 120B) of a database system (e.g., system 100) as a part of processing a database transaction (e.g., a database transaction 122). In some cases, method 500 may be performed by executing program instructions that are stored on a non-transitory computer-readable medium (e.g., memory 820). In some embodiments, method 500 includes more or less steps than shown. As an example, method 500 may include a step in which the first database node returns a response to the transaction requestor.

Method 500 begins in step 510 with the first database node receiving a request to perform a database transaction that includes writing a particular record (e.g., a database record 132) for a key (e.g., a key 134) included in a keyspace (e.g., a keyspace 210). Before receiving the request to perform the database transaction, the first database node may issue a permission request to the database system (e.g., to catalog manager node 140) for approval to write records for the keyspace. Accordingly, the first database node may receive permission (e.g., a keyspace permission 124) to write records for the keyspace. In some instances, the permission for the keyspace may be re-provisioned from a second database node (e.g., database node 120A) to the first database node. In some embodiments, active transactions on the second database node that include writing records to the keyspace are permitted to commit subsequent to the permission to write records for the keyspace being received by the first database node. In some cases, at least one of the active transactions may have caused a record write to the keyspace before the permission was received by the first database node.

In step 520, the first database node accesses a keyspace reference catalog (e.g., storage catalog 145) that stores a plurality of indications (e.g., keyspace references 126) of when keyspaces were written to by database nodes of the database system. The plurality of indications may include a set of indications that are specific to the keyspace. One of the set of indications may identify a database node that is permitted to write records for the keyspace, and two or more of the set of indications may identify database nodes at which to read records written for the keyspace. As such, a particular indication may indicate that, while permission is granted to the first database node, all record writes to the keyspace are to be performed by the first database node. The first database node may receive, from the second database node, a write request to write a particular record for the keyspace as part of an active transaction on the second database node. Accordingly, the first database node may grant permission to write the particular record to the second database node. The second database node may then use the permission to accomplish its write.

In some cases, a particular indication may identify an epoch range (e.g., an epoch range 230) for the keyspace and is associated with the second database node. The first database node may make a determination that an epoch corresponding to the database transaction falls within the epoch range. The determination may be indicative that the second database node has potentially written a record for the keyspace within a particular time frame. In some cases, the epoch range of the particular indication may be modified in response to a commitment of a last active transaction that is linked to the particular indication. The epoch range may or may not define an epoch for the upper bound of the epoch range prior to the modifying of the particular indication. The particular indication may be deleted after storing, in a persistence database (e.g., database 110) of the database system, all records written at the second database node for the keyspace. In various embodiments, indications are only maintained for uncommitted work or for transactions in main memory and not yet flushed to persistent storage

In step 530, in response to determining that the second database node has potentially written a record for the keyspace within the particular time frame, the first database node sends a request (e.g., a record request 136) to the second database node for information indicating whether the second database node has written a record for the key. In step 540, based on a response (e.g., a record response 138) that is received from the second database node, the first database node determines whether to write the particular record. In some cases, in response to determining that the second database node has written a record for the key, the first database node may abort at least a portion of the database transaction that involves writing the particular record. In some cases, in response to determining that the second database node has written a record for the key, the first database node may wait until the record written by the second database node has been committed before writing the particular record.

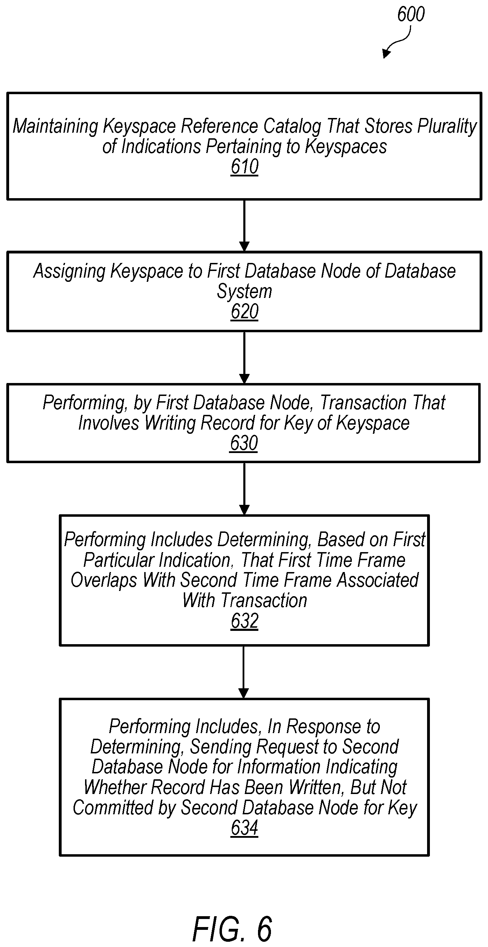

Turning now to Fig. 6, a flow diagram of a method 600 is shown. Method 600 is one embodiment of a method that is performed by a database system (e.g., system 100) as a part of processing a database transaction (e.g., a database transaction 122). In some cases, method 600 may be performed by executing program instructions that are stored on a non-transitory computer-readable medium (e.g., memory 820). In some embodiments, method 600 includes more or less steps than shown. For example, method 600 may include a step in which a first database node (e.g., database node 120B) of the database system returns a response to the transaction requestor.

Method 600 begins in step 610 with the database system maintaining a keyspace reference catalog (e.g., storage catalog 145) that stores a plurality of indications (e.g., keyspace references 126) pertaining to keyspaces (e.g., keyspaces 210). In step 620, the database system assigns a keyspace to the first database node. In various cases, a first particular one of the plurality of indications identifies a first time frame (e.g., an epoch range 230) and a second database node (e.g., database node 120A) of the database system that was previously assigned the keyspace such that the second database node had been permitted to write, at the second database node, records whose keys fall within the keyspace. The database system may add a second particular indication to the keyspace reference catalog that specifies an open state (e.g., an open state 240) that indicates that all record writes for the keyspace are to occur at the first database node. The database system may update the first particular indication to specify a closed state (e.g., a closed state 240) that indicates that record writes for the keyspace are not to occur at the second database node. In some cases, the database system receives an upgrade request to perform a rolling upgrade at the second database node and performs the assigning in response to receiving the upgrade request.

In step 630, the first database node performs a transaction that involves writing a record for a key of the keyspace. The performing includes, in step 632, the first database node determining, based on the first particular indication, that the first time frame overlaps with a second time frame associated with the transaction. The performing includes, in step 634, in response to the determining, the first database node sending a request (e.g., a record request 136) to the second database node for information indicating whether a record has been written, but not committed by the second database node for the key. In response to determining that the second database node has not written a record for the key, the first database node writes the particular record.

### Exemplary Multi-Tenant Database System

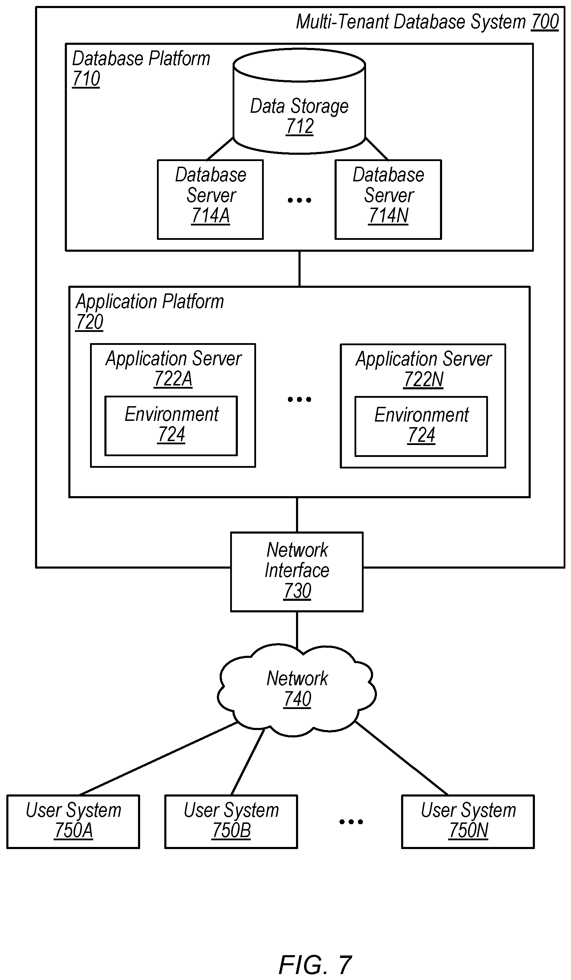

Turning now to Fig. 7, an exemplary multi-tenant database system (MTS) 700 in which various techniques of the present disclosure can be implemented is shown-e.g., system 100 may be MTS 700. In Fig. 7, MTS 700 includes a database platform 710, an application platform 720, and a network interface 730 connected to a network 740. Also as shown, database platform 710 includes a data storage 712 and a set of database servers 714A-N that interact with data storage 712, and application platform 720 includes a set of application servers 722A-N having respective environments 724. In the illustrated embodiment, MTS 700 is connected to various user systems 750A-N through network 740. The disclosed multi-tenant system is included for illustrative purposes and is not intended to limit the scope of the present disclosure. In other embodiments, techniques of this disclosure are implemented in non-multi-tenant environments such as client/server environments, cloud computing environments, clustered computers, etc.

MTS 700, in various embodiments, is a set of computer systems that together provide various services to users (alternatively referred to as "tenants") that interact with MTS 700. In some embodiments, MTS 700 implements a customer relationship management (CRM) system that provides mechanism for tenants (e.g., companies, government bodies, etc.) to manage their relationships and interactions with customers and potential customers. For example, MTS 700 might enable tenants to store customer contact information (e.g., a customer's website, email address, telephone number, and social media data), identify sales opportunities, record service issues, and manage marketing campaigns. Furthermore, MTS 700 may enable those tenants to identify how customers have been communicated with, what the customers have bought, when the customers last purchased items, and what the customers paid. To provide the services of a CRM system and/or other services, as shown, MTS 700 includes a database platform 710 and an application platform 720.

Database platform 710, in various embodiments, is a combination of hardware elements and software routines that implement database services for storing and managing data of MTS 700, including tenant data. As shown, database platform 710 includes data storage 712. Data storage 712, in various embodiments, includes a set of storage devices (e.g., solid state drives, hard disk drives, etc.) that are connected together on a network (e.g., a storage attached network (SAN)) and configured to redundantly store data to prevent data loss. In various embodiments, data storage 712 is used to implement a database (e.g., database 110) comprising a collection of information that is organized in a way that allows for access, storage, and manipulation of the information. Data storage 712 may implement a single database, a distributed database, a collection of distributed databases, a database with redundant online or offline backups or other redundancies, etc. As part of implementing the database, data storage 712 may store files (e.g., files 115) that include one or more database records having respective data payloads (e.g., values for fields of a database table) and metadata (e.g., a key value, timestamp, table identifier of the table associated with the record, tenant identifier of the tenant associated with the record, etc.).

In various embodiments, a database record may correspond to a row of a table. A table generally contains one or more data categories that are logically arranged as columns or fields in a viewable schema. Accordingly, each record of a table may contain an instance of data for each category defined by the fields. For example, a database may include a table that describes a customer with fields for basic contact information such as name, address, phone number, fax number, etc. A record therefore for that table may include a value for each of the fields (e.g., a name for the name field) in the table. Another table might describe a purchase order, including fields for information such as customer, product, sale price, date, etc. In various embodiments, standard entity tables are provided for use by all tenants, such as tables for account, contact, lead and opportunity data, each containing pre-defined fields. MTS 700 may store, in the same table, database records for one or more tenants-that is, tenants may share a table. Accordingly, database records, in various embodiments, include a tenant identifier that indicates the owner of a database record. As a result, the data of one tenant is kept secure and separate from that of other tenants so that that one tenant does not have access to another tenant's data, unless such data is expressly shared.

In some embodiments, the data stored at data storage 712 is organized as part of a log-structured merge-tree (LSM tree). An LSM tree normally includes two high-level components: an in-memory cache and a persistent storage. In operation, a database server 714 may initially write database records into a local in-memory cache before later flushing those records to the persistent storage (e.g., data storage 712). As part of flushing database records, the database server 714 may write the database records into new files that are included in a "top" level of the LSM tree. Over time, the database records may be rewritten by database servers 714 into new files included in lower levels as the database records are moved down the levels of the LSM tree. In various implementations, as database records age and are moved down the LSM tree, they are moved to slower and slower storage devices (e.g., from a solid state drive to a hard disk drive) of data storage 712.

When a database server 714 wishes to access a database record for a particular key, the database server 714 may traverse the different levels of the LSM tree for files that potentially include a database record for that particular key. If the database server 714 determines that a file may include a relevant database record, the database server 714 may fetch the file from data storage 712 into a memory of the database server 714. The database server 714 may then check the fetched file for a database record having the particular key. In various embodiments, database records are immutable once written to data storage 712. Accordingly, if the database server 714 wishes to modify the value of a row of a table (which may be identified from the accessed database record), the database server 714 writes out a new database record to the top level of the LSM tree. Over time, that database record is merged down the levels of the LSM tree. Accordingly, the LSM tree may store various database records for a database key where the older database records for that key are located in lower levels of the LSM tree then newer database records.

Database servers 714, in various embodiments, are hardware elements, software routines, or a combination thereof capable of providing database services, such as data storage, data retrieval, and/or data manipulation. A database server 714 may correspond to a database node 120. Such database services may be provided by database servers 714 to components (e.g., application servers 722) within MTS 700 and to components external to MTS 700. As an example, a database server 714 may receive a database transaction request from an application server 722 that is requesting data to be written to or read from data storage 712. The database transaction request may specify an SQL SELECT command to select one or more rows from one or more database tables. The contents of a row may be defined in a database record and thus database server 714 may locate and return one or more database records that correspond to the selected one or more table rows. In various cases, the database transaction request may instruct database server 714 to write one or more database records for the LSM tree-database servers 714 maintain the LSM tree implemented on database platform 710. In some embodiments, database servers 714 implement a relational database management system (RDMS) or object oriented database management system (OODBMS) that facilitates storage and retrieval of information against data storage 712. In various cases, database servers 714 may communicate with each other to facilitate the processing of transactions. For example, database server 714A may communicate with database server 714N to determine if database server 714N has written a database record into its in-memory cache for a particular key.

Application platform 720, in various embodiments, is a combination of hardware elements and software routines that implement and execute CRM software applications as well as provide related data, code, forms, web pages and other information to and from user systems 750 and store related data, objects, web page content, and other tenant information via database platform 710. In order to facilitate these services, in various embodiments, application platform 720 communicates with database platform 710 to store, access, and manipulate data. In some instances, application platform 720 may communicate with database platform 710 via different network connections. For example, one application server 722 may be coupled via a local area network and another application server 722 may be coupled via a direct network link. Transfer Control Protocol and Internet Protocol (TCP/IP) are exemplary protocols for communicating between application platform 770 and database platform 710, however, it will be apparent to those skilled in the art that other transport protocols may be used depending on the network interconnect used.

Application servers 722, in various embodiments, are hardware elements, software routines, or a combination thereof capable of providing services of application platform 720, including processing requests received from tenants of MTS 700. Application servers 722, in various embodiments, can spawn environments 724 that are usable for various purposes, such as providing functionality for developers to develop, execute, and manage applications (e.g., business logic). Data may be transferred into an environment 724 from another environment 724 and/or from database platform 710. In some cases, environments 724 cannot access data from other environments 724 unless such data is expressly shared. In some embodiments, multiple environments 724 can be associated with a single tenant.

Application platform 720 may provide user systems 750 access to multiple, different hosted (standard and/or custom) applications, including a CRM application and/or applications developed by tenants. In various embodiments, application platform 720 may manage creation of the applications, testing of the applications, storage of the applications into database objects at data storage 712, execution of the applications in an environment 724 (e.g., a virtual machine of a process space), or any combination thereof. In some embodiments, application platform 720 may add and remove application servers 722 from a server pool at any time for any reason, there may be no server affinity for a user and/or organization to a specific application server 722. In some embodiments, an interface system (not shown) implementing a load balancing function (e.g., an F5 Big-IP load balancer) is located between the application servers 722 and the user systems 750 and is operable to distribute requests to the application servers 722. In some embodiments, the load balancer uses a least connections algorithm to route user requests to the application servers 722. Other examples of load balancing algorithms, such as are round robin and observed response time, also can be used. For example, in certain embodiments, three consecutive requests from the same user could hit three different servers 722, and three requests from different users could hit the same server 722.

In some embodiments, MTS 700 provides security mechanisms, such as encryption, to keep each tenant's data separate unless the data is shared. If more than one server 714 or 722 is used, they may be located in close proximity to one another (e.g., in a server farm located in a single building or campus), or they may be distributed at locations remote from one another (e.g., one or more servers 714 located in city A and one or more servers 722 located in city B). Accordingly, MTS 700 may include one or more logically and/or physically connected servers distributed locally or across one or more geographic locations.

One or more users (e.g., via user systems 750) may interact with MTS 700 via network 740. User system 750 may correspond to, for example, a tenant of MTS 700, a provider (e.g., an administrator) of MTS 700, or a third party. Each user system 750 may be a desktop personal computer, workstation, laptop, PDA, cell phone, or any Wireless Access Protocol (WAP) enabled device or any other computing device capable of interfacing directly or indirectly to the Internet or other network connection. User system 750 may include dedicated hardware configured to interface with MTS 700 over network 740. User system 750 may execute a graphical user interface (GUI) corresponding to MTS 700, an HTTP client (e.g., a browsing program, such as Microsoft's Internet Explorer^{™} browser, Netscape's Navigator^{™} browser, Opera's browser, or a WAP-enabled browser in the case of a cell phone, PDA or other wireless device, or the like), or both, allowing a user (e.g., subscriber of a CRM system) of user system 750 to access, process, and view information and pages available to it from MTS 700 over network 740. Each user system 750 may include one or more user interface devices, such as a keyboard, a mouse, touch screen, pen or the like, for interacting with a graphical user interface (GUI) provided by the browser on a display monitor screen, LCD display, etc. in conjunction with pages, forms and other information provided by MTS 700 or other systems or servers. As discussed above, disclosed embodiments are suitable for use with the Internet, which refers to a specific global internetwork of networks. It should be understood, however, that other networks may be used instead of the Internet, such as an intranet, an extranet, a virtual private network (VPN), a non-TCP/IP based network, any LAN or WAN or the like.

Because the users of user systems 750 may be users in differing capacities, the capacity of a particular user system 750 might be determined one or more permission levels associated with the current user. For example, when a salesperson is using a particular user system 750 to interact with MTS 700, that user system 750 may have capacities (e.g., user privileges) allotted to that salesperson. But when an administrator is using the same user system 750 to interact with MTS 700, the user system 750 may have capacities (e.g., administrative privileges) allotted to that administrator. In systems with a hierarchical role model, users at one permission level may have access to applications, data, and database information accessible by a lower permission level user, but may not have access to certain applications, database information, and data accessible by a user at a higher permission level. Thus, different users may have different capabilities with regard to accessing and modifying application and database information, depending on a user's security or permission level. There may also be some data structures managed by MTS 700 that are allocated at the tenant level while other data structures are managed at the user level.

In some embodiments, a user system 750 and its components are configurable using applications, such as a browser, that include computer code executable on one or more processing elements. Similarly, in some embodiments, MTS 700 (and additional instances of MTSs, where more than one is present) and their components are operator configurable using application(s) that include computer code executable on processing elements. Thus, various operations described herein may be performed by executing program instructions stored on a non-transitory computer-readable medium and executed by processing elements. The program instructions may be stored on a non-volatile medium such as a hard disk, or may be stored in any other volatile or non-volatile memory medium or device as is well known, such as a ROM or RAM, or provided on any media capable of staring program code, such as a compact disk (CD) medium, digital versatile disk (DVD) medium, a floppy disk, and the like. Additionally, the entire program code, or portions thereof, may be transmitted and downloaded from a software source, e.g., over the Internet, or from another server, as is well known, or transmitted over any other conventional network connection as is well known (e.g., extranet, VPN, LAN, etc.) using any communication medium and protocols (e.g., TCP/IP, HTTP, HTTPS, Ethernet, etc.) as are well known. It will also be appreciated that computer code for implementing aspects of the disclosed embodiments can be implemented in any programming language that can be executed on a server or server system such as, for example, in C, C+, HTML, Java, JavaScript, or any other scripting language, such as VBScript.

Network 740 may be a LAN (local area network), WAN (wide area network), wireless network, point-to-point network, star network, token ring network, hub network, or any other appropriate configuration. The global internetwork of networks, often referred to as the "Internet" with a capital "I," is one example of a TCP/IP (Transfer Control Protocol and Internet Protocol) network. It should be understood, however, that the disclosed embodiments may utilize any of various other types of networks.

User systems 750 may communicate with MTS 700 using TCP/IP and, at a higher network level, use other common Internet protocols to communicate, such as HTTP, FTP, AFS, WAP, etc. For example, where HTTP is used, user system 750 might include an HTTP client commonly referred to as a "browser" for sending and receiving HTTP messages from an HTTP server at MTS 700. Such a server might be implemented as the sole network interface between MTS 700 and network 740, but other techniques might be used as well or instead. In some implementations, the interface between MTS 700 and network 740 includes load sharing functionality, such as round-robin HTTP request distributors to balance loads and distribute incoming HTTP requests evenly over a plurality of servers.

In various embodiments, user systems 750 communicate with application servers 722 to request and update system-level and tenant-level data from MTS 700 that may require one or more queries to data storage 712. In some embodiments, MTS 700 automatically generates one or more SQL statements (the SQL query) designed to access the desired information. In some cases, user systems 750 may generate requests having a specific format corresponding to at least a portion of MTS 700. As an example, user systems 750 may request to move data objects into a particular environment 724 using an object notation that describes an object relationship mapping (e.g., a JavaScript object notation mapping) of the specified plurality of objects.

### Exemplary Computer System

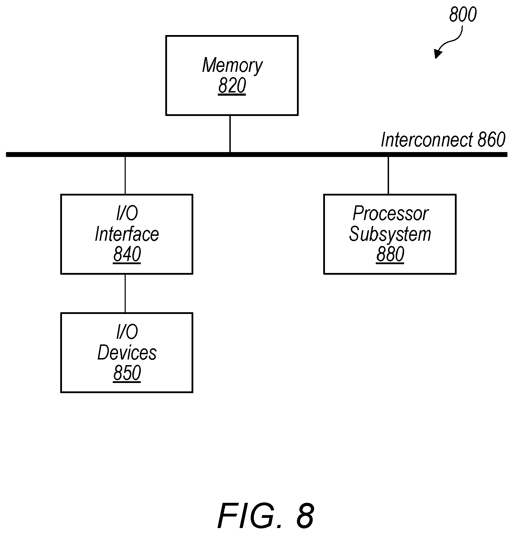

Turning now to Fig. 8, a block diagram of an exemplary computer system 800, which may implement system 100, database 110, database node 120, MTS 700, and/or user system 750, is depicted. Computer system 800 includes a processor subsystem 880 that is coupled to a system memory 820 and I/O interfaces(s) 840 via an interconnect 860 (e.g., a system bus). I/O interface(s) 840 is coupled to one or more I/O devices 850. Although a single computer system 800 is shown in Figure 8 for convenience, system 800 may also be implemented as two or more computer systems operating together.

Processor subsystem 880 may include one or more processors or processing units. In various embodiments of computer system 800, multiple instances of processor subsystem 880 may be coupled to interconnect 860. In various embodiments, processor subsystem 880 (or each processor unit within 880) may contain a cache or other form of on-board memory.

System memory 820 is usable store program instructions executable by processor subsystem 880 to cause system 800 perform various operations described herein. System memory 820 may be implemented using different physical memory media, such as hard disk storage, floppy disk storage, removable disk storage, flash memory, random access memory (RAM-SRAM, EDO RAM, SDRAM, DDR SDRAM, RAMBUS RAM, etc.), read only memory (PROM, EEPROM, etc.), and so on. Memory in computer system 800 is not limited to primary storage such as memory 820. Rather, computer system 800 may also include other forms of storage such as cache memory in processor subsystem 880 and secondary storage on I/O Devices 850 (e.g., a hard drive, storage array, etc.). In some embodiments, these other forms of storage may also store program instructions executable by processor subsystem 880. In some embodiments, program instructions that when executed implement database application 300 may be included/stored within system memory 820.

I/O interfaces 840 may be any of various types of interfaces configured to couple to and communicate with other devices, according to various embodiments. In one embodiment, I/O interface 840 is a bridge chip (e.g., Southbridge) from a front-side to one or more back-side buses. I/O interfaces 840 may be coupled to one or more I/O devices 850 via one or more corresponding buses or other interfaces. Examples of I/O devices 850 include storage devices (hard drive, optical drive, removable flash drive, storage array, SAN, or their associated controller), network interface devices (e.g., to a local or wide-area network), or other devices (e.g., graphics, user interface devices, etc.). In one embodiment, computer system 800 is coupled to a network via a network interface device 850 (e.g., configured to communicate over WiFi, Bluetooth, Ethernet, etc.).

The present disclosure includes references to "embodiments," which are non-limiting implementations of the disclosed concepts. References to "an embodiment," "one embodiment," "a particular embodiment," "some embodiments," "various embodiments," and the like do not necessarily refer to the same embodiment.

The present disclosure includes references to "an "embodiment" or groups of "embodiments" (e.g., "some embodiments" or "various embodiments"). Embodiments are different implementations or instances of the disclosed concepts. References to "an embodiment," "one embodiment," "a particular embodiment," and the like do not necessarily refer to the same embodiment.

This disclosure may discuss potential advantages that may arise from the disclosed embodiments. Not all implementations of these embodiments will necessarily manifest any or all of the potential advantages. Whether an advantage is realized for a particular implementation depends on many factors, some of which are outside the scope of this disclosure. In fact, there are a number of reasons why an implementation that falls within the scope of the claims might not exhibit some or all of any disclosed advantages. For example, a particular implementation might include other circuitry outside the scope of the disclosure that, in conjunction with one of the disclosed embodiments, negates or diminishes one or more the disclosed advantages. Furthermore, suboptimal design execution of a particular implementation (e.g., implementation techniques or tools) could also negate or diminish disclosed advantages. Even assuming a skilled implementation, realization of advantages may still depend upon other factors such as the environmental circumstances in which the implementation is deployed. For example, inputs supplied to a particular implementation may prevent one or more problems addressed in this disclosure from arising on a particular occasion, with the result that the benefit of its solution may not be realized. Given the existence of possible factors external to this disclosure, it is expressly intended that any potential advantages described herein are not to be construed as claim limitations that must be met to demonstrate infringement. Rather, identification of such potential advantages is intended to illustrate the type(s) of improvement available to designers having the benefit of this disclosure. That such advantages are described permissively (e.g., stating that a particular advantage "may arise") is not intended to convey doubt about whether such advantages can in fact be realized, but rather to recognize the technical reality that realization of such advantages often depends on additional factors.

Unless stated otherwise, embodiments are non-limiting. That is, the disclosed embodiments are not intended to limit the scope of claims that are drafted based on this disclosure, even where only a single example is described with respect to a particular feature. The disclosed embodiments are intended to be illustrative rather than restrictive, absent any statements in the disclosure to the contrary. The application is thus intended to permit embodiments, as well as such alternatives, modifications, and equivalents that would be within the scope of the claims.

Because this disclosure is a legal document, various terms and phrases may be subject to administrative and judicial interpretation. Public notice is hereby given that the following paragraphs, as well as definitions provided throughout the disclosure, are to be used in determining how to interpret claims that are drafted based on this disclosure.

References to a singular form of an item (i.e., a noun or noun phrase preceded by "a," "an," or "the") are, unless context clearly dictates otherwise, intended to mean "one or more." Reference to "an item" in a claim thus does not, without accompanying context, preclude additional instances of the item. A "plurality" of items refers to a set of two or more of the items.

The word "may" is used herein in a permissive sense (i.e., having the potential to, being able to) and not in a mandatory sense (i.e., must).

The terms "comprising" and "including," and forms thereof, are open-ended and mean "including, but not limited to."

When the term "or" is used in this disclosure with respect to a list of options, it will generally be understood to be used in the inclusive sense unless the context provides otherwise. Thus, a recitation of "x or y" is equivalent to "x or y, or both," and thus covers 1) x but not y, 2) y but not x, and 3) both x and y. On the other hand, a phrase such as "either x or y, but not both" makes clear that "or" is being used in the exclusive sense.

A recitation of "w, x, y, or z, or any combination thereof" or "at least one of ... w, x, y, and z" is intended to cover all possibilities involving a single element up to the total number of elements in the set. For example, given the set [w, x, y, z], these phrasings cover any single element of the set (e.g., w but not x, y, or z), any two elements (e.g., w and x, but not y or z), any three elements (e.g., w, x, and y, but not z), and all four elements. The phrase "at least one of ... w, x, y, and z" thus refers to at least one element of the set [w, x, y, z], thereby covering all possible combinations in this list of elements. This phrase is not to be interpreted to require that there is at least one instance of w, at least one instance of x, at least one instance of y, and at least one instance of z.

Various "labels" may precede nouns or noun phrases in this disclosure. Unless context provides otherwise, different labels used for a feature (e.g., "first circuit," "second circuit," "particular circuit," "given circuit," etc.) refer to different instances of the feature. Additionally, the labels "first," "second," and "third" when applied to a feature do not imply any type of ordering (e.g., spatial, temporal, logical, etc.), unless stated otherwise.

The phrase "based on" or is used to describe one or more factors that affect a determination. This term does not foreclose the possibility that additional factors may affect the determination. That is, a determination may be solely based on specified factors or based on the specified factors as well as other, unspecified factors. Consider the phrase "determine A based on B." This phrase specifies that B is a factor that is used to determine A or that affects the determination of A. This phrase does not foreclose that the determination of A may also be based on some other factor, such as C. This phrase is also intended to cover an embodiment in which A is determined based solely on B. As used herein, the phrase "based on" is synonymous with the phrase "based at least in part on."

The phrases "in response to" and "responsive to" describe one or more factors that trigger an effect. This phrase does not foreclose the possibility that additional factors may trigger the effect, jointly with the specified factors. That is, an effect may be solely in response to those factors, or may be in response to the specified factors as well as other, unspecified factors. Consider the phrase "perform A in response to B." This phrase specifies that B is a factor that triggers the performance of A, or that triggers a particular result for A. This phrase also does not foreclose that performing A may be jointly in response to B and C. This phrase is also intended to cover an embodiment in which A is performed solely in response to B. As used herein, the phrase "responsive to" is synonymous with the phrase "responsive at least in part to." Similarly, the phrase "in response to" is synonymous with the phrase "at least in part in response to."

Within this disclosure, different entities (which may variously be referred to as "units," "circuits," other components, etc.) may be described or claimed as "configured" to perform one or more tasks or operations. This formulation-[entity] configured to [perform one or more tasks]-is used herein to refer to structure (i.e., something physical). More specifically, this formulation is used to indicate that this structure is arranged to perform the one or more tasks during operation. A structure can be said to be "configured to" perform some task even if the structure is not currently being operated. Thus, an entity described or recited as being "configured to" perform some task refers to something physical, such as a device, circuit, a system having a processor unit and a memory storing program instructions executable to implement the task, etc. This phrase is not used herein to refer to something intangible.

In some cases, various units/circuits/components may be described herein as performing a set of task or operations. It is understood that those entities are "configured to" perform those tasks/operations, even if not specifically noted.

The term "configured to" is not intended to mean "configurable to." An unprogrammed FPGA, for example, would not be considered to be "configured to" perform a particular function. This unprogrammed FPGA may be "configurable to" perform that function, however. After appropriate programming, the FPGA may then be said to be "configured to" perform the particular function.

Different "circuits" may be described in this disclosure. These circuits or "circuitry" constitute hardware that includes various types of circuit elements, such as combinatorial logic, clocked storage devices (e.g., flip-flops, registers, latches, etc.), finite state machines, memory (e.g., random-access memory, embedded dynamic random-access memory), programmable logic arrays, and so on. Circuitry may be custom designed, or taken from standard libraries. In various implementations, circuitry can, as appropriate, include digital components, analog components, or a combination of both. Certain types of circuits may be commonly referred to as "units" (e.g., a decode unit, an arithmetic logic unit (ALU), functional unit, memory management unit (MMU), etc.). Such units also refer to circuits or circuitry.

The disclosed circuits/units/components and other elements illustrated in the drawings and described herein thus include hardware elements such as those described in the preceding paragraph. In many instances, the internal arrangement of hardware elements within a particular circuit may be specified by describing the function of that circuit. For example, a particular "decode unit" may be described as performing the function of "processing an opcode of an instruction and routing that instruction to one or more of a plurality of functional units," which means that the decode unit is "configured to" perform this function. This specification of function is sufficient, to those skilled in the computer arts, to connote a set of possible structures for the circuit.

In various embodiments, as discussed in the preceding paragraph, circuits, units, and other elements defined by the functions or operations that they are configured to implement, The arrangement and such circuits/units/components with respect to each other and the manner in which they interact form a microarchitectural definition of the hardware that is ultimately manufactured in an integrated circuit or programmed into an FPGA to form a physical implementation of the microarchitectural definition. Thus, the microarchitectural definition is recognized by those of skill in the art as structure from which many physical implementations may be derived, all of which fall into the broader structure described by the microarchitectural definition. That is, a skilled artisan presented with the microarchitectural definition supplied in accordance with this disclosure may, without undue experimentation and with the application of ordinary skill, implement the structure by coding the description of the circuits/units/components in a hardware description language (HDL) such as Verilog or VHDL. The HDL description is often expressed in a fashion that may appear to be functional. But to those of skill in the art in this field, this HDL description is the manner that is used transform the structure of a circuit, unit, or component to the next level of implementational detail. Such an HDL description may take the form of behavioral code (which is typically not synthesizable), register transfer language (RTL) code (which, in contrast to behavioral code, is typically synthesizable), or structural code (e.g., a netlist specifying logic gates and their connectivity). The HDL description may subsequently be synthesized against a library of cells designed for a given integrated circuit fabrication technology, and may be modified for timing, power, and other reasons to result in a final design database that is transmitted to a foundry to generate masks and ultimately produce the integrated circuit. Some hardware circuits or portions thereof may also be custom-designed in a schematic editor and captured into the integrated circuit design along with synthesized circuitry. The integrated circuits may include transistors and other circuit elements (e.g. passive elements such as capacitors, resistors, inductors, etc.) and interconnect between the transistors and circuit elements. Some embodiments may implement multiple integrated circuits coupled together to implement the hardware circuits, and/or discrete elements may be used in some embodiments. Alternatively, the HDL design may be synthesized to a programmable logic array such as a field programmable gate array (FPGA) and may be implemented in the FPGA. This decoupling between the design of a group of circuits and the subsequent low-level implementation of these circuits commonly results in the scenario in which the circuit or logic designer never specifies a particular set of structures for the low-level implementation beyond a description of what the circuit is configured to do, as this process is performed at a different stage of the circuit implementation process.

The fact that many different low-level combinations of circuit elements may be used to implement the same specification of a circuit results in a large number of equivalent structures for that circuit. As noted, these low-level circuit implementations may vary according to changes in the fabrication technology, the foundry selected to manufacture the integrated circuit, the library of cells provided for a particular project, etc. In many cases, the choices made by different design tools or methodologies to produce these different implementations may be arbitrary.

Moreover, it is common for a single implementation of a particular functional specification of a circuit to include, for a given embodiment, a large number of devices (e.g., millions of transistors). Accordingly, the sheer volume of this information makes it impractical to provide a full recitation of the low-level structure used to implement a single embodiment, let alone the vast array of equivalent possible implementations. For this reason, the present disclosure describes structure of circuits using the functional shorthand commonly employed in the industry.

## Claims

1. A method, comprising:
receiving, by a first database node of a database system, information that indicates that a keyspace has been provisioned to the first database node to write records having keys that fall in the keyspace, wherein the keyspace was previously provisioned to a second database node of the database system;
receiving, by the first database node, a request to perform a database transaction that includes writing a particular record for a key included in the keyspace;
accessing, by the first database node, a keyspace reference catalog that stores a plurality of indications of when keyspaces were written to by database nodes of the database system;
in response to determining that the second database node has written at least one record for the keyspace within a particular time frame, the first database node sending a request to the second database node for information indicating whether the second database node has written a record for the same key; and
based on a response indicating that the second database node has not written a record for the same key, the first database node writing the particular record.

2. The method of claim 1, further comprising:
before receiving the request to perform the database transaction, the first database node issuing a permission request to the database system for approval to write records for the keyspace, wherein the information is received in response to issuing the permission request.

3. The method of claim 2, wherein active transactions on the second database node that include writing records to the keyspace are permitted to commit subsequent to the keyspace being provisioned to the first database node, and wherein at least one of the active transactions caused a record write for the keyspace before the permission was provisioned to the first database node.

4. The method of claim 2, wherein a particular one of the plurality of indications indicates that, while the keyspace is provisioned to the first database node, all record writes to the keyspace identified by the particular indication are to be performed by the first database node.

5. The method of claim 4, further comprising:
receiving, by the first database node, a relinquish request to relinquish the keyspace to the second database node to permit the second database node to write a record for the keyspace as part of an active transaction on the second database node; and
relinquishing, by the first database node, the keyspace in response to the relinquish request.

6. The method of any of claims 1 to 5, wherein a particular one of the plurality of indications identifies an epoch range for the keyspace and is associated with the second database node, and wherein the method further comprises:
making, by the first database node, a determination that an epoch corresponding to the database transaction falls within the epoch range, wherein the determination is indicative that the second database node has written a record for the keyspace within the particular time frame.

7. The method of claim 6, further comprising:
modifying the epoch range in response to a commitment of a last active transaction that is linked to the particular indication, wherein the epoch range does not define an epoch for the upper bound of the epoch range prior to the modifying.

8. The method of claim 6, further comprising:
deleting the particular indication after storing, in a persistence database of the database system, all records written at the second database node for the keyspace.

9. The method of claim 1, wherein the plurality of indications includes a set of indications for the keyspace, and wherein one of the set of indications identifies a database node permitted to write records for the keyspace, and wherein two or more of the set of indications identify database nodes at which to read records written for the keyspace.

10. A computer readable medium having program instructions stored thereon that are executable by a first database node of a database system to cause the first database node to perform operations comprising:
receiving information that indicates that a keyspace has been provisioned to the first database node to write records having keys that fall in the keyspace, wherein the keyspace was previously provisioned to a second database node of the database system;
receiving a request to perform a database transaction that includes writing a particular record for a key included in a keyspace;
accessing a keyspace reference catalog that stores a plurality of indications of when keyspaces were written to by database nodes of the database system;
in response to determining that the second database node has written at least one record for the keyspace within a particular time frame, sending a request to the second database node for information indicating whether the second database node has written a record for the same key; and
based on a response indicating that the second database node has not written a record for the same key, writing the particular record.

11. The medium of claim 10, wherein a particular one of the plurality of indications that corresponds to the second database node identifies the keyspace by a minimum key and a maximum key, and wherein the particular indication specifies a time frame that encompasses the particular time frame.

12. The medium of claim 10, wherein the operations further comprise:
requesting approval to write records for the keyspace at the first database node, wherein the information is received in response to requesting approval; and
causing a particular indication to be stored at the keyspace reference catalog, wherein the particular indication indicates that all record writes for the keyspace are to occur at the first database node.

13. The medium of claim 12, wherein the operations further comprise:
performing another database transaction that includes writing another particular record for the key included in the keyspace;
determining, using the keyspace reference catalog, that permission to write records for the keyspace has been transferred to a third database node; and
sending a write request to the third database node to write the other particular record.

14. A computer system, comprising:
at least one processor; and
memory having program instructions stored thereon that are executable by the at least one processor to perform the method of any of claims 1 to 9.

## Patentansprüche

1. Verfahren, umfassend:
Empfangen, durch einen ersten Datenbankknoten eines Datenbanksystems, von Informationen, die angeben, dass ein Schlüsselraum dem ersten Datenbankknoten zum Schreiben von Datensätzen mit Schlüsseln bereitgestellt wurde, die in den Schlüsselraum fallen, wobei der Schlüsselraum zuvor einem zweiten Datenbankknoten des Datenbanksystems bereitgestellt wurde;
Empfangen, durch den ersten Datenbankknoten, einer Anforderung zum Durchführen einer Datenbanktransaktion, die ein Schreiben eines bestimmten Datensatzes für einen Schlüssel beinhaltet, der in dem Schlüsselraum enthalten ist;
Zugreifen, durch den ersten Datenbankknoten, auf einen Schlüsselraumreferenzkatalog, der mehrere Angaben darüber speichert, wann Schlüsselräume durch Datenbankknoten des Datenbanksystems beschrieben wurden;
als Antwort auf ein Bestimmen, dass der zweite Datenbankknoten mindestens einen Datensatz für den Schlüsselraum innerhalb eines bestimmten Zeitrahmens geschrieben hat, Senden, durch den ersten Datenbankknoten, einer Anforderung von Informationen an den zweiten Datenbankknoten, die angeben, ob der zweite Datenbankknoten einen Datensatz für denselben Schlüssel geschrieben hat; und
basierend auf einer Antwort, die angibt, dass der zweite Datenbankknoten keinen Datensatz für denselben Schlüssel geschrieben hat, Schreiben, durch den ersten Datenbankknoten, des bestimmten Datensatzes.

2. Verfahren nach Anspruch 1, ferner umfassend:
vor Empfangen der Anforderung zum Durchführen der Datenbanktransaktion, Ausgeben, durch den ersten Datenbankknoten, einer Berechtigungsanforderung an das Datenbanksystem zur Genehmigung eines Schreibens von Datensätzen für den Schlüsselraum, wobei die Informationen als Antwort auf das Ausgeben der Berechtigungsanforderung empfangen werden.

3. Verfahren nach Anspruch 2, wobei eine Berechtigung für einen Commit aktiver Transaktionen auf dem zweiten Datenbankknoten, die ein Schreiben von Datensätzen in den Schlüsselraum beinhalten, erteilt wird, nachdem der Schlüsselraum dem ersten Datenbankknoten bereitgestellt wurde, und wobei mindestens eine der aktiven Transaktionen einen Datensatzschreibvorgang für den Schlüsselraum verursachte, bevor die Berechtigung dem ersten Datenbankknoten bereitgestellt wurde.

4. Verfahren nach Anspruch 2, wobei eine bestimmte der mehreren Angaben angibt, dass, während der Schlüsselraum dem ersten Datenbankknoten bereitgestellt wird, alle Datensatzschreibvorgänge in den Schlüsselraum, die durch die bestimmte Angabe identifiziert werden, durch den ersten Datenbankknoten durchzuführen sind.

5. Verfahren nach Anspruch 4, ferner umfassend:
Empfangen, durch den ersten Datenbankknoten, einer Abtretungsanforderung zum Abtreten des Schlüsselraums an den zweiten Datenbankknoten, um den zweiten Datenbankknoten zu berechtigen, einen Datensatz für den Schlüsselraum als Teil einer aktiven Transaktion auf dem zweiten Datenbankknoten zu schreiben; und
Abtreten, durch den ersten Datenbankknoten, des Schlüsselraums als Antwort auf die Abtretungsanforderung.

6. Verfahren nach einem der Ansprüche 1 bis 5, wobei eine bestimmte der mehreren Angaben einen Epochenbereich für den Schlüsselraum identifiziert und mit dem zweiten Datenbankknoten assoziiert ist, und wobei das Verfahren ferner Folgendes umfasst:
Durchführen, durch den ersten Datenbankknoten, einer Bestimmung, dass eine Epoche, die der Datenbanktransaktion entspricht, in den Epochenbereich fällt, wobei die Bestimmung angibt, dass der zweite Datenbankknoten einen Datensatz für den Schlüsselraum innerhalb des bestimmten Zeitrahmens geschrieben hat.

7. Verfahren nach Anspruch 6, ferner umfassend:
Modifizieren des Epochenbereichs als Antwort auf einen Commit einer letzten aktiven Transaktion, die mit der bestimmten Angabe verknüpft ist, wobei der Epochenbereich keine Epoche für die Obergrenze des Epochenbereichs vor der Modifizierung definiert.

8. Verfahren nach Anspruch 6, ferner umfassend:
Löschen der bestimmten Angabe nach Speichern, in einer Persistenzdatenbank des Datenbanksystems, aller an dem zweiten Datenbankknoten für den Schlüsselraum geschriebenen Datensätze.

9. Verfahren nach Anspruch 1, wobei die mehreren Angaben einen Satz von Angaben für den Schlüsselraum beinhalten, und wobei eine des Satzes von Angaben einen Datenbankknoten identifiziert, der zum Schreiben von Datensätzen für den Schlüsselraum berechtigt ist, und wobei zwei oder mehr des Satzes von Angaben Datenbankknoten identifizieren, an denen für den Schlüsselraum geschriebene Datensätze ausgelesen werden sollen.

10. Computerlesbares Medium, auf dem Programmanweisungen gespeichert sind, die durch einen ersten Datenbankknoten eines Datenbanksystem ausführbar sind, um den ersten Datenbankknoten zu veranlassen, Operationen durchzuführen, die Folgendes umfassen:
Empfangen von Informationen, die angeben, dass ein Schlüsselraum dem ersten Datenbankknoten zum Schreiben von Datensätzen mit Schlüsseln bereitgestellt wurde, die in den Schlüsselraum fallen, wobei der Schlüsselraum zuvor einem zweiten Datenbankknoten des Datenbanksystems bereitgestellt wurde;
Empfangen einer Anforderung zum Durchführen einer Datenbanktransaktion, die ein Schreiben eines bestimmten Datensatzes für einen Schlüssel beinhaltet, der in einem Schlüsselraum enthalten ist;
Zugreifen auf einen Schlüsselraumreferenzkatalog, der mehrere Angaben darüber speichert, wann Schlüsselräume durch Datenbankknoten des Datenbanksystems beschrieben wurden;
als Antwort auf ein Bestimmen, dass der zweite Datenbankknoten mindestens einen Datensatz für den Schlüsselraum innerhalb eines bestimmten Zeitrahmens geschrieben hat, Senden einer Anforderung von Informationen an den zweiten Datenbankknoten, die angeben, ob der zweite Datenbankknoten einen Datensatz für denselben Schlüssel geschrieben hat; und
basierend auf einer Antwort, die angibt, dass der zweite Datenbankknoten keinen Datensatz für denselben Schlüssel geschrieben hat, Schreiben des bestimmten Datensatzes.

11. Medium nach Anspruch 10, wobei eine bestimmte der mehreren Angaben, die dem zweiten Datenbankknoten entspricht, den Schlüsselraum durch einen minimalen Schlüssel und einen maximalen Schlüssel identifiziert, und wobei die bestimmte Angabe einen Zeitrahmen spezifiziert, der den bestimmten Zeitrahmen einschließt.

12. Medium nach Anspruch 10, wobei die Operationen ferner Folgendes umfassen:
Anfordern einer Genehmigung zum Schreiben von Datensätzen für den Schlüsselraum an dem ersten Datenbankknoten, wobei die Informationen als Antwort auf das Anfordern einer Genehmigung empfangen werden; und
Veranlassen, dass eine bestimmte Angabe an dem Schlüsselraumreferenzkatalog gespeichert wird, wobei die bestimmte Angabe angibt, dass alle Datensatzschreibvorgänge für den Schlüsselraum an dem ersten Datenbankknoten stattzufinden haben.

13. Medium nach Anspruch 12, wobei die Operationen ferner Folgendes umfassen:
Durchführen einer anderen Datenbanktransaktion, die ein Schreiben eines anderen bestimmten Datensatzes für den in dem Schlüsselraum enthaltenen Schlüssel beinhaltet;
Bestimmen, unter Verwendung des Schlüsselraumreferenzkatalogs, dass eine Berechtigung zum Schreiben von Datensätzen für den Schlüsselraum an einen dritten Datenbankknoten übertragen wurde; und
Senden einer Schreibanforderung an den dritten Datenbankknoten zum Schreiben des anderen bestimmten Datensatzes.

14. Computersystem, umfassend:
mindestens einen Prozessor; und
einen Speicher, auf dem Programmanweisungen gespeichert sind, die durch den mindestens einen Prozessor ausführbar sind, um das Verfahren nach einem der Ansprüche 1 bis 9 durchzuführen.

## Revendications

1. Procédé, comprenant les faits :
de recevoir, par un premier nœud de base de données d'un système de données de base, des informations qui indiquent qu'un espace de clef a été fourni au premier nœud de base de données pour écrire des enregistrements ayant des clefs qui s'intègrent dans l'espace de clef, dans lequel l'espace de clef a été auparavant fourni à un deuxième nœud de base de données du système de données de base ;
de recevoir, par le premier nœud de base de données, une demande de réaliser une transaction de base de données qui inclut le fait d'écrire un enregistrement particulier pour une clef incluse dans l'espace de clef ;
d'accéder, par le premier nœud de base de données, à un catalogue de référence d'espace de clef qui stocke une pluralité d'indications d'instants auxquels des nœuds de base de données du système de données de base ont écrit dans des espaces de clef ;
en réponse au fait de déterminer que le deuxième nœud de base de données a écrit au moins un enregistrement pour l'espace de clef dans les limites d'un intervalle de temps particulier, le premier nœud de base de données envoie une demande au deuxième nœud de base de données en ce qui concerne des informations indiquant si le deuxième nœud de base de données a écrit un enregistrement pour la même clef ; et
sur la base d'une réponse indiquant que le deuxième nœud de base de données n'a pas écrit d'enregistrement pour la même clef, le premier nœud de base de données écrit l'enregistrement particulier.

2. Procédé de la revendication 1, comprenant en outre : avant de recevoir la demande de réaliser la transaction de base de données, le premier nœud de base de données émet une demande de permission au système de données de base pour l'approbation d'écrire des enregistrements pour l'espace de clef, dans lequel les informations sont reçues en réponse à l'émission de la demande de permission.

3. Procédé de la revendication 2, dans lequel des transactions actives sur le deuxième nœud de base de données, qui incluent le fait d'écrire des enregistrements dans l'espace de clef, sont permises d'être accomplies à la suite de la circonstance où l'espace de clef est fourni au premier nœud de base de données, et dans lequel au moins une des transactions actives a causé une écrite d'enregistrement pour l'espace de clef avant que la permission ne soit fournie au premier nœud de base de données.

4. Procédé de la revendication 2, dans lequel une particulière de la pluralité d'indications indique que, alors que l'espace de clef est fourni au premier nœud de base de données, toutes les écritures d'enregistrement dans l'espace de clef identifiées par l'indication particulière doivent être réalisées par le premier nœud de base de données.

5. Procédé de la revendication 4, comprenant en outre :
de recevoir, par le premier nœud de base de données, une demande d'abandon, pour abandonner l'espace de clef au profit du deuxième nœud de base de données pour permettre au deuxième nœud de base de données d'écrire un enregistrement pour l'espace de clef en tant que partie d'une transaction active sur le deuxième nœud de base de données ; et
d'abandonner, par le premier nœud de base de données, l'espace de clef en réponse à la demande d'abandon.

6. Procédé de quelconques des revendications 1 à 5, dans lequel une particulière de la pluralité d'indications identifie un intervalle d'époque pour l'espace de clef et est associée au deuxième nœud de base de données, et dans lequel le procédé comprend en outre : le fait d'effectuer, par le premier nœud de base de données, une détermination qu'une époque correspondant à la transaction de base de données est dans les limites de l'intervalle d'époque, dans lequel la détermination est indicative de la circonstance où le deuxième nœud de base de données a écrit un enregistrement pour l'espace de clef dans les limites de l'intervalle de temps particulier.

7. Procédé de la revendication 6, comprenant en outre : le fait de modifier l'intervalle d'époque en réponse à un accomplissement d'une dernière transaction active qui est liée à l'indication particulière, dans lequel l'intervalle d'époque ne définit pas d'époque pour la limite supérieure de l'intervalle d'époque avant le fait de modifier.

8. Procédé de la revendication 6, comprenant en outre : le fait de supprimer l'indication particulière après avoir stocké, dans une base de données de persistance du système de données de base, tous les enregistrements écrits, au deuxième nœud de base de données, pour l'espace de clef.

9. Procédé de la revendication 1, dans lequel la pluralité d'indications inclut un ensemble d'indications pour l'espace de clef, et dans lequel une de l'ensemble d'indications identifie un nœud de base de données permis d'écrire des enregistrements pour l'espace de clef, et dans lequel deux, ou plus de deux, de l'ensemble d'indications identifient des nœuds de base de données auxquels il faut lire des enregistrements écrits pour l'espace de clef.

10. Support lisible par ordinateur ayant des instructions de programme stockées sur celui-ci qui sont exécutables par un premier nœud de base de données d'un système de données de base pour amener le premier nœud de base de données à réaliser des opérations comprenant les faits :
de recevoir des informations qui indiquent qu'un espace de clef a été fourni au premier nœud de base de données pour écrire des enregistrements ayant des clefs qui s'intègrent dans l'espace de clef, dans lequel l'espace de clef a été auparavant fourni à un deuxième nœud de base de données du système de données de base ;
de recevoir une demande de réaliser une transaction de base de données qui inclut le fait d'écrire un enregistrement particulier pour une clef incluse dans un espace de clef ;
d'accéder à un catalogue de référence d'espace de clef qui stocke une pluralité d'indications d'instants auxquels des nœuds de base de données du système de données de base ont écrit dans des espaces de clef ;
en réponse au fait de déterminer que le deuxième nœud de base de données a écrit au moins un enregistrement pour l'espace de clef dans les limites d'un intervalle de temps particulier, d'envoyer une demande au deuxième nœud de base de données en ce qui concerne des informations indiquant si le deuxième nœud de base de données a écrit un enregistrement pour la même clef ; et
sur la base d'une réponse indiquant que le deuxième nœud de base de données n'a pas écrit d'enregistrement pour la même clef, d'écrire l'enregistrement particulier.

11. Support de la revendication 10, dans lequel une particulière de la pluralité d'indications qui correspond au deuxième nœud de base de données identifie l'espace de clef par une clef minimum et une clef maximum, et dans lequel l'indication particulière spécifie un intervalle de temps qui englobe l'intervalle de temps particulier.

12. Support de la revendication 10, dans lequel les opérations comprennent en outre les faits :
de demander l'approbation d'écrire des enregistrements pour l'espace de clef, au premier nœud de base de données, dans lequel les informations sont reçues en réponse au fait de demander l'approbation ; et
d'amener une indication particulière à être stockée au catalogue de référence d'espace de clef, dans lequel l'indication particulière indiquent que toutes les écritures d'enregistrement pour l'espace de clef doivent se produire au premier nœud de base de données.

13. Support de la revendication 12, dans lequel les opérations comprennent en outre les faits :
de réaliser une autre transaction de base de données qui inclut le fait d'écrire un autre enregistrement particulier pour la clef incluse dans l'espace de clef ;
de déterminer, en utilisant le catalogue de référence d'espace de clef, qu'une permission d'écrire des enregistrements pour l'espace de clef a été transférée à un troisième nœud de base de données ; et
d'envoyer une demande d'écriture au troisième nœud de base de données pour écrire l'autre enregistrement particulier.

14. Système d'ordinateur, comprenant :
au moins un processeur ; et
une mémoire ayant des instructions de programme stockées sur celles-ci qui sont exécutables par l'au moins un processeur pour réaliser le procédé de quelconques des revendications 1 à 9.
